# FASCICULE DE BREVET EUROPEEN

(11) **EP 0 508 949 B1**
(45) Date de publication et mention de la délivrance du brevet: **05.07.1995**
(21) Numéro de dépôt: 92810213.6
(22) Date de dépôt: 24.03.1992
(51) Int. Cl.: H02K 7/102

(54) **Procédé de montage d'un moteur frein électrique**
Verfahren zum Aufbau eines elektrischen Bremsmotors
Method for mounting a braking motor

(30) Priorité: 09.04.1991 FR 9104310
(43) Date de publication de la demande: 14.10.1992
(73) Titulaire: SOMFY, F-74300 Cluses (FR)
(72) Inventeur: Jacqui, Thierry, F-74700 Sallanches (FR)
(74) Mandataire: Meylan, Robert Maurice

(56) Documents cités:
- EP-A- 0 043 498
- GB-A- 1 165 186

## Description

La présente invention a pour objet un procédé de montage du rotor et du frein d'un moteur frein électrique dont le frein comprend un plateau déplaçable axialement entre le rotor et un contre-plateau fixé au moins axialement sur l'axe du rotor sous les actions antagonistes du champ magnétique et d'un moyen élastique.

Dans les freins de ce type, comprenant généralement une garniture de frein entre le plateau et le contre-plateau (EP-A-0043 498), la distance entre les deux positions du plateau est égale à l'entrefer entre le rotor et le plateau en l'absence d'excitation. Cette distance est par conséquent également appelée valeur d'entrefer. Cette valeur d'entrefer est obtenue par le positionnement du contre-plateau sur l'arbre du rotor. Pour des raisons de performance, la valeur d'entrefer doit être aussi réduite et aussi régulière que possible. Jusqu'ici, le réglage de la valeur d'entrefer s'est effectuée par l'interposition temporaire de cales étalons, par lecture optique ou par palpage mécanique.

Dans le cas de réglage par cales, le contre-plateau est, soit emmanché délicatement jusqu'à ce que les cales soient glissantes dans l'entrefer, soit emmanché rapidement jusqu'à venir en butée, puis retiré d'une faible valeur contrôlée, pour permettre le retrait des cales. Ces deux méthodes présentent les mêmes inconvénients qui sont la lenteur d'exécution, une automatisation difficile et une précision aléatoire, fonction de la sensibilité de l'exécutant.

Dans le cas du réglage par mesure optique, les variations de contraste entre les pièces assemblées, les défauts d'état de surface et les poussières sont à l'origine de diffractions génératrices d'imprécision. Quant au réglage par palpage mécanique, il ne peut pas être exécuté de façon satisfaisante car il est en général impossible de placer le palpeur directement sur les surfaces d'entrefer pour des raisons d'accessibilité. La mesure se fait donc de façon indirecte sur des surfaces associées, ce qui intègre toutes les erreurs dimensionnelles et géométriques de ces surfaces de référence par rapport à celles de l'entrefer.

Les trois méthodes ci-dessus nécessitent, en outre, un réglage machine délicat qu'il est nécessaire de répéter lors de chaque mise en route d'une nouvelle série.

La présente invention a pour but d'obtenir une valeur d'entrefer précise par un procédé obviant aux inconvénients des méthodes antérieures.

Le procédé de montage selon l'invention est défini à la revendication 1.

Les deux zones de poussée peuvent être coplanaires, l'une des zones coopérant alors avec des protubérances de hauteur calibrée solidaires du plateau.

Les deux zones de poussée peuvent être coplanaires, l'une des zones coopérant alors avec des protubérances de hauteur calibrée solidaires du plateau.

Si le plateau présente une face d'entrefer plane uniforme, la zone de poussée du plateau est alors située à l'extrémité de protubérances solidaires de l'outil.

Dans tous les cas la poussée simultanée du rotor, du plateau et du contre-plateau assure automatiquement une valeur d'entrefer dont la précision ne dépend que de la hauteur calibrée des protubérances. Si les protubérances sont prévues sur l'outil, il est évident qu'il est possible d'obtenir une très grande précision.

Le dessin annexé représente, à titre d'exemple, trois modes d'exécution.

La figure 1 est une vue partielle d'un moteur au repos selon un premier mode d'exécution.

La figure 2 illustre le mode de montage du rotor et du frein du moteur représenté à la figure 1.

La figure 3 illustre le montage d'un frein selon un deuxième mode d'exécution.

La figure 4 illustre le montage selon un troisième mode d'exécution.

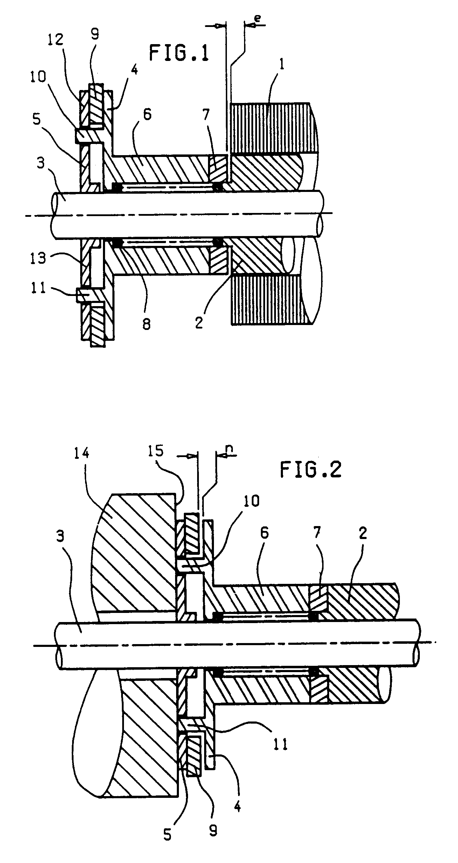

Le moteur partiellement représenté à la figure 1 comprend un stator 1 à l'intérieur duquel est logé un rotor 2 calé sur un arbre 3. Sur cet arbre 3 sont en outre montés un plateau de frein 4 et un contre-plateau 5. Le plateau 4, par exemple en alliage léger, est venu d'une pièce avec un manchon 6 dont l'extrémité en regard du rotor 2 est munie d'une bague 7 en métal ferromagnétique. Le contre-plateau 5 est fixé sur l'arbre 3, tandis que le manchon 6 est mobile axialement sur l'arbre 3 et poussé en direction du contre-plateau 5 par un ressort 8 monté à l'intérieur du manchon 6 et travaillant en compression entre l'extrémité du rotor 2 et le plateau 4. En l'absence d'excitation du moteur, le plateau 4 pince une garniture de frein 9 contre le contre-plateau 5. La garniture de frein 9 est constituée d'une pièce annulaire fixée au boîtier du moteur. Une telle construction est bien connue en soi. Entre la bague 7 et le rotor 2 est laissé un entrefer e de grandeur parfaitement déterminée et calculée. Lorsque le moteur est excité, la bague 7 est attirée contre le rotor 2 en libérant le frein.

Le plateau de frein 4 est muni d'au moins deux protubérances en forme de colonne 10 et 11 de hauteur déterminée, parallèles à l'arbre 3 et traversant des découpes 12 et 13 prévues à cet effet dans le contre-plateau 5.

Le rotor 2, le plateau 4 et le contre-plateau 5 sont montés simultanément sur l'arbre 3. A cet effet on utilise un outil 14 présentant une extrémité cylindrique terminée par une face frontale plane 15 perpendiculaire à l'axe du cylindre. Au moyen de l'outil 14 on pousse simultanément sur l'arbre 3 le rotor 2, le plateau 4 et le contre-plateau 5. Une partie de la face 15 de l'outil pousse le plateau 4 par ses colonnes 10 et 11, tandis que le reste de la surface 15 pousse le contre-plateau 5. Le rotor 2 est poussé par l'intermédiaire du manchon 6 et de la bague 7. La hauteur des colonnes 10 et 11 est telle qu'une fois le rotor 2 en place sur l'arbre 3, il subsiste un espace n entre le plateau 4 et la garniture de frein 9, cet espace étant égal à l'entrefer e.

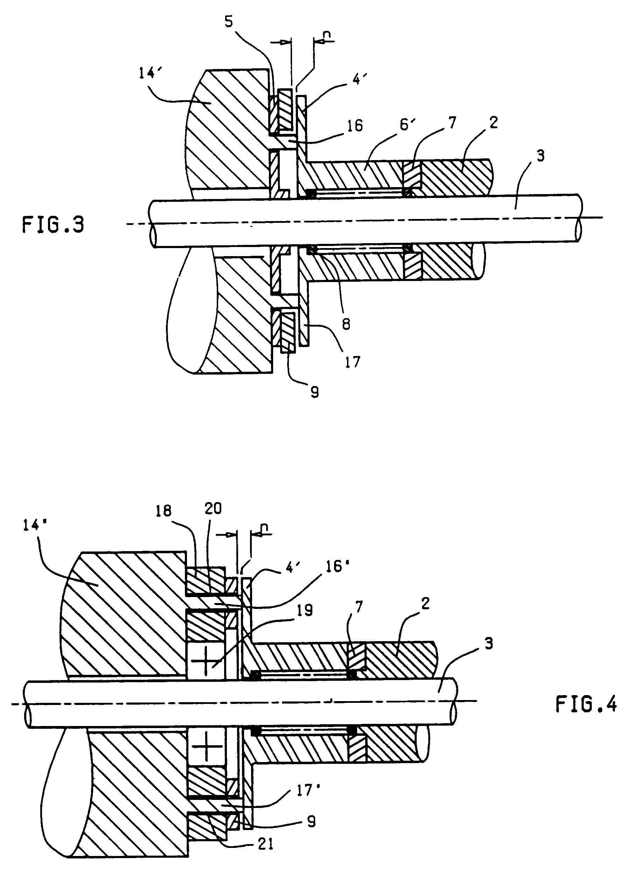

Au lieu de munir le plateau de frein 4 de protubérances 10 et 11, il est possible de prévoir ces protubérances sur l'outil. De telles formes d'exécution sont représentées aux figures 3 et 4.

A la figure 3, l'outil 14′ présente au moins deux colonnes 16 et 17 de hauteur calibrée. Le plateau de frein 4′ est lisse. Lors du montage, les extrémités des colonnes 16 et 17 poussent le plateau de frein 4′, tandis que le reste de la surface frontale de l'outil pousse le contre-plateau 5. Une fois le rotor 2 en place sur son arbre, un espace n subsiste entre la garniture de frein 9 et le plateau 4′. Cet espace n est à nouveau égal à l'entrefer e.

Dans le mode d'exécution représenté à la figure 4, l'outil 14˝ est à nouveau muni de colonnes 16˝, 17˝ de hauteur calibrée supérieure à la hauteur des colonnes 16 et 17. La garniture de frein 9 est ici fixée sur le contre-plateau 18 réalisé en forme de bague montée sur l'arbre 3 au moyen d'un roulement à billes 19. La bague 18 est destinée à être fixée au boîtier du moteur. Elle présente des passages 20 et 21 pour le libre passage des colonnes 16˝ et 17˝.

Tous les éléments représentés sont à nouveau poussés sur l'axe par l'outil 14˝ qui pousse le plateau 4′, et avec lui le rotor 2, par les extrémités de ses colonnes 16˝ et 17˝ et pousse le contre-plateau 18 et son roulement 19 par le reste de sa face frontale. Lors de la poussée, un espace n subsiste à nouveau entre le plateau 4′ et la garniture 9, cet espace étant égal à l'entrefer e.

## Revendications

1. Procédé de montage du rotor et du frein d'un moteur frein électrique dont le frein comprend un plateau (4) déplaçable axialement entre le rotor (2) et un contre-plateau (5) fixé au moins axialement sur l'axe du rotor sous les actions antagonistes du champ magnétique et d'un moyen élastique (8), caractérisé en ce qu'on monte simultanément sur l'arbre (3) le rotor (2), le plateau de frein (4) et le contre-plateau (5) en les poussant sur l'arbre au moyen d'un outil (14) présentant deux zones de poussée dont l'une pousse le plateau (4) et le rotor (2) et l'autre pousse le contre-plateau (5), l'outil ou le plateau présentant des colonnes (10, 11; 16, 17; 16˝, 17˝) traversant le contre-plateau (5), colonnes dont la hauteur est telle que lorsque l'outil est poussé à fond, il subsiste un espace n entre le plateau (4) et la garniture de frein (9), n étant égal à l'entrefer désiré.

2. Procédé selon la revendication 1, caractérisé en ce que les deux zones de poussée sont situées dans un même plan (15) constituant la face frontale de l'outil (14), que le plateau de frein (4) présente des protubérances (10, 11) de hauteur calibrée et que le contre-plateau (5) présente des découpes (12, 13) laissant passer lesdites protubérances de manière à ce que ces protubérances viennent buter contre la zone de poussée correspondante de l'outil.

3. Procédé selon la revendication 1, caractérisé en ce que l'outil (14′ ; 14˝) présente une face frontale constituant la zone de poussée du contre-plateau, cette face frontale présentant des protubérances (16, 17 ; 16˝, 17˝) de hauteur calibrée dont les extrémités constituent la seconde zone de poussée, le contre-plateau (5) présentant des découpes pour le passage desdites protubérances.

4. Procédé selon la revendication 3, pour le montage d'un frein dont le contre-plateau fixe (18) est monté rotativement sur l'arbre du rotor et muni d'une garniture de frein (9), caractérisé en ce que la garniture est également munie de découpes pour le passage desdites protubérances.

## Patentansprüche

1. Verfahren zur Montage des Rotors und der Bremse eines elektrischen Bremsmotors, dessen Bremse eine Platte (4) aufweist, welche zwischen dem Rotor (2) und einer wenigstens axial auf der Rotorachse befestigten Gegenplatte (5) unter den entgegenwirkenden Wirkungen des magnetischen Feldes und eines elastischen Mittels (8) axial verschiebbar ist, dadurch gekennzeichnet, dass der Rotor (2), die Bremsplatte (4) und die Gegenplatte (5) gleichzeitig auf die Welle (3) montiert werden, indem sie mittels eines Werkzeuges (14), welches zwei Stosszonen aufweist, auf der Welle geschoben werden, wobei eine der Stosszonen die Platte (4) und den Rotor (2) stösst, und die andere die Gegenplatte (5) stösst, wobei das Werkzeug oder die Platte Säulen (10, 11; 16, 17; 16˝, 17˝) aufweist, welche die Gegenplatte (5) durchqueren und eine solche Höhe aufweisen, dass ein Raum n zwischen der Platte (4) und dem Bremsbelag (9) übrigbleibt, wenn das Werkzeug bis zum Ende gestossen wird, wobei n den Wert des gewünschten Eisenspaltes beträgt.

2. Verfahren nach Anspruch 1, dadurch gekennzeichnet, dass die beiden Stosszonen sich in einer gleichen Ebene (15) befinden, welche die Stirnseite des Werkzeuges (14) bildet, dass die Bremsplatte (4) Ansätze (10, 11) einer kalibrierten Höhe aufweist, und dass die Gegenplatte (5) Ausnehmungen (12, 13) aufweist, welche die genannten Ansätze durchlassen, so dass diese Ansätze gegen die entsprechende Stosszone des Werkzeuges anschlagen.

3. Verfahren nach Anspruch 1, dadurch gekennzeichnet, dass das Werkzeug (14′, 14˝) eine Stirnseite aufweist, welche die Stosszone der Gegenplatte bildet, wobei diese Stirnseite Ansätze (16, 17; 16˝, 17˝) einer kalibrierten Höhe aufweist, deren Enden die zweite Stosszone bilden, wobei die Gegenplatte (5) Ausnnehmungen für den Durchgang der genannten Ansätze aufweist.

4. Verfahren nach Anspruch 3 für die Montage einer Bremse, deren feste Gegenplatte (18) drehbar auf der Rotorwelle montiert ist und mit einem Bremsbelag (9) versehen ist, dadurch gekennzeichnet, dass der Bremsbelag auch mit Ausnehmungen für den Durchgang der genannten Ansätze versehen ist.

## Claims

1. A method for mounting the rotor and the brake of an electrical brake motor whose brake comprises a plate (4) which can be axially moved between the rotor (2) and a backplate (5) fixed at least axially to the shaft (3) of the rotor (2) due to the opposing actions of the magnetic field and of an elastic means (8), characterized in that the rotor (2), the brake plate (4) and the backplate (5) are mounted simultaneously onto the shaft (3) by pushing them onto the shaft by means of a tool (14) having two pushing zones, one of which pushes the plate (4) and the rotor (2) and the other pushes the backplate (5), wherein the tool or the plate are equipped with columns (10, 11; 16, 17; 16˝, 17˝) passing through the backplate (5), the height of the columns being such that when the tool is fully pushed a space n remains between the plate (4) and the brake lining (9) where n is equal to the desired air-gap.

2. Method as claimed in claim 1, characterized in that the two pushing zones are located in a same plane (15) constituting the frontal face of the tool (14), wherein the brake plate (4) has protuberances (10, 11) of calibrated height and wherein the backplate (5) has cut-outs (12, 13) allowing said protuberances to pass in such a manner that these protuberances abut against the corresponding pushing zone of the tool.

3. Method as claimed in claim 1, characterized in that the tool (14′, 14˝) has a frontal face constituting the pushing zone of the backplate, this frontal face having protuberances (16, 17; 16˝, 17˝) of calibrated height whose ends constitute the second pushing zone, the backplate (5) having cut-outs for the passage of said protuberances.

4. Method as claimed in claim 3, for the mounting of a brake whose stationary backplate (18) is rotatably mounted onto the shaft of the rotor and fitted with a brake lining (9), characterized in that the lining is also fitted with a cut-out for the passage of the said protuberances.
